Europäisches Patentamt

(19) European Patent Office

Office européen des brevets

(11) Publication number: **0 253 484**
**B1**

(12) # EUROPEAN PATENT SPECIFICATION

(45) Date of publication of the patent specification:
05.12.90

(51) Int. Cl.⁵: **G01T 1/204,** G01T 1/202

(21) Application number: **87304873.0**

(22) Date of filing: **02.06.87**

(54) Liquid scintillation measurement system with solid crystal guard shield.

(30) Priority: **17.07.86 US 887067**

(43) Date of publication of application:
**20.01.88 Bulletin 88/3**

(45) Publication of the grant of the patent:
**05.12.90 Bulletin 90/49**

(84) Designated Contracting States:
**CH DE FR GB IT LI NL**

(56) References cited:
**EP-A- 0 201 445**
**US-A- 389 863**

**INSTRUMENTS AND EXPERIMENTAL TECHNIQUES,
vol. 17, January/February 1974, pages 59-62,
Consultants Bureau, New York, US; T.N. SEREDENKO
et al.: "Scintillation granules in the coincidence
method"**

(73) Proprietor: **Packard Instrument Company, Inc.,
2200 Warrenville Road, Downers Grove, IL 60515(US)**

(72) Inventor: **Valenta, Robert J., 5820 Elm Avenue, Berkeley
Illinois 60163(US)**

(74) Representative: **McCallum, William Potter et al,
Cruikshank & Fairweather 19 Royal Exchange Square,
Glasgow G1 3AE Scotland(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

This invention generally relates to means for accurately measuring radiation emitted by radionuclides. More specifically, the present invention is directed to an improved liquid scintillation analyzer of the coincident pulse detection type which allows increased accuracy in low level liquid scintillation counting.

Liquid scintillation analyzers have become increasingly common in the accurate measurement of radiation activity in view of their relatively high counting efficiency, even for low energy radioisotopes such as tritium. Although a variety of techniques are used, in its most basic form liquid scintillation analysis involves dissolving or suspending radionuclides in a solvent system capable of absorbing and transmitting energy originating from radioactive decay of a sample without attenuating that energy significantly. The solvent also contains a scintillator material and the combination of the sample, the solvent and the scintillator is commonly called a "scintillator cocktail." When radioactive decay occurs, it is followed by energy transfer from the radionuclide through the solvent system to the scintillator material in such a way that the scintillator material is activated and scintillates, thereby releasing light photons.

Early liquid scintillation analyzers were based on solitary photomultipliers for multiplying light signals resulting from scintillations within the cocktail with the photomultiplier output being amplified and analyzed by a suitable pulse analyzer. Such analyzers were susceptible to a variety of problems arising from inherent system noise as well as interfering radiation from external and internal sources leading to inaccurate measurements. This problem was solved to a certain extent by the advent of coincident pulse detecting liquid scintillation measurement systems which utilize a pair of photomultipliers aligned along a common axis with the radioactive sample being placed in between the two photomultipliers. An electrical pulse arising as a result of the presence of radioactive emission from within the sample is considered to be the result of a legitimate radioactive event only if corresponding pulses from each of the photomultiplier tubes arrive at a coincidence detector within a predefined resolving time interval. By requiring the coincidental registration of radioactive events such liquid scintillation analyzers provide reasonable accuracy of measurement by minimizing the degrading effects arising due to the internal noise generated from within the system.

Such conventional measurement systems provide a certain degree of discrimination against some background events, particularly those due to internal system noise. However, they are critically affected by the existence of background radiation activity which may be generated by a variety of factors including environmental radiation, cosmic rays, static electricity, chemiluminescence, residual radioactivity of the vial or container for the scintillation cocktail and the glass used in the photomultiplier tubes and other proximate components. Radiation from these sources produce scintillations within the scintillation cocktail, sample vial or photomultiplier tube glass which become confused with, and are recorded as, valid cocktail scintillations resulting from actual radioactive decay of the sample. Protection against the effects of external radiation on such measurement systems is accomplished by the provision of a large mass of shielding material, usually lead, to form a radiation guard surrounding the liquid sample. This passive shielding, however, is not totally perfect in preventing external radiation from penetrating the system and may contain its own interfering radiation in the form of contaminants. Additionally, lead shielding is ineffective against contaminating radiation in components that are contained within the shield, such as the sample vial and the photomultiplier tubes.

Additional reduction of the effects of background radiation in liquid scintillation measurements has been accomplished by the use of guard systems employing scintillation materials, additional photodetectors sensing scintillations within the guard scintillator and a set of electronic circuits operating in anti-coincidence with the sample measurement circuitry.

Such systems, although very good at sensing and eliminating erroneous background radiation, are extremely expensive, bulky and inconvenient. As with lead shielding, they are ineffective at eliminating the effects of background radiation from contaminants within the shielded area.

Subsequent improvements in liquid scintillation measurements have involved the use of a solid scintillation material as a guard and anti-coincidence arrangements with the coincident pulse detectors that are used by the system to detect sample scintillations also being used to detect scintillations in the guard scintillator. These systems include timing discrimination means capable of distinguishing between the fast rise times of scintillations from the liquid scintillator caused by radioactive events from within the test samples and those scintillations which are induced in the guard scintillator as a result of background radioactivity and have slower rise times.

An example of such scintillation counting apparatus is disclosed in U.S. Patent No. 3 898 463. The apparatus disclosed in this reference is used for both soft beta radiation and gamma radiation and includes a counting chamber of an inorganic phosphor disposed around a vessel containing a scintillation cocktail. The provision of such a chamber eliminates the need to use massive radiation shields. The inorganic phosphor acts as a guard as well as a detector. Background radiation incident on the inorganic phosphor causes scintillations in the inorganic phosphor and consequently the emission of photons from the inorganic phosphor. The apparatus uses a radiation-guard counter which can simultaneously count and sort background radiation from the true beta decay events of the scintillation sample. The origin of a photon is determined by its pulse shape and height. An electronic circuit is used to measure the rise and/or decay time of the pulse shape of the photon and thereby determine whether the radioactive event was a scintillation of the liquid sample or a scintillation in the inorganic phosphor guard due to the background radiation. The photon produced by a scintillation of the liquid sample has a fast rise time and a short decay time, whereas a photon produced by a scintillation in the inorganic phosphor due to background radiation has a relatively long decay time.

Although the accuracy of measurement is improved, such measuring systems are still susceptible to the effects of background radioactivity, particularly in the measurement of radioactivity levels of materials, such as tritium, which have relatively low energy emission levels, making them less easily distinguishable from the various background radiation sources.

Corresponding US Patent No. 4 651 006 or parent application EP-A 201 445 disclose a system which provides improved discrimination between background pulses and those pulses generated by true radioactive events in the sample, thereby improving the efficiency and accuracy of measurement by the use of liquid scintillation analyzers. The system utilizes certain of the inherent characteristics of the pulses being detected in order to ascertain whether they are valid sample pulses generated by sample optical events which are pulse producing events resulting from the radioactive decay of the sample to be measured or invalid background pulses which are pulses generated by anything other than a sample optical event. This includes background optical events and electrical noise. The main sources of background optical events are scintillations of the sample vial or photomultiplier tube glass caused by internal contaminating radiation contained within the detection system and its associated shield materials, as well as external radiation that has penetrated the system shield. The background discrimination technique is based on the premise that most background pulses triggering the coincidence detectors of the pulse detection systems have a series of randomly spaced pulses (a characteristic pulse burst) of relatively smaller energy levels and of approximate single photoelectron amplitude immediately following a coincident pulse.

In this system, a particular coincident pulse is assumed to have been generated as a result of background scintillation and is disregarded in the determination of the overall energy spectrum of the radioactive sample being tested, if tracking of the output of the photomultiplier tubes for a predetermined period of time after the detection of the coincident pulse reveals that the characteristic burst of low energy pulses has occurred. The number of pulses detected in the pulse burst (the burst count) following a coincident pulse within a predetermined time period (approximately 5 microseconds) is utilized directly to determine whether or not the coincidence pulse is to be counted. Alternatively, the burst count is used in conjunction to calculate the probability that the detected coincident pulse is the result of a valid sample scintillation.

The above type of burst detection technique provides more accurate measurements as compared to conventional liquid scintillation systems by generally improving discrimination between background and valid sample pulses. However, if the number of pulses existing in a characteristic pulse burst produced by an invalid background event is very small, the threshold number of pulses that must be detected within the predetermined time period following a coincident pulse in order to signify an invalid optical event is correspondingly small. In cases where the threshold number is extremely small, distinguishing between valid and invalid optical events is difficult because of the after-pulsing phenomenon in the photomultiplier tubes, which sometimes produces a small number of pulses following a valid optical event. There is, hence, an increased probability of misclassifying valid and invalid optical events.

This problem is of particular significance when the radionuclide under test has a low level of radioactivity so that the number of radioactive disintegrations and hence the valid count rate resulting from sample radioactivity is low enough to be comparable with the count-rate resulting from invalid background events. In such cases, even a few misclassifications can critically affect the sensitivity of measurement by significantly lowering the figure of merit for the measurement system, thereby increasing the probability that a background event will be falsely treated as a valid optical event.

The present invention is aimed at solving this problem by adapting the burst-detection technique of the parent application in a manner that enhances the ability of liquid scintillation analyzers to accurately discriminate between pulses generated due to valid radioactive events and those generated by background radiation activity, especially in the case of extremely low-level radionuclides.

It is a primary object of the present invention to provide an improved liquid scintillation counter which is economical, less bulky and capable of determining the radioactive count rate for a radionuclide sample with increased reliability and accuracy without the need for an external guard shield and its associated detection system.

It is another object of the present invention to provide a technique and system for providing increased discrimination capability between sample scintillations and background scintillations.

It is a further object of the present invention to provide improved efficiency and accuracy of measurement and improved background discrimination capability for a liquid scintillation measurement system based upon the detection of a burst of pulses following a coincident pulse and the energy of the coincident pulse towards determining the extent to which a coincident pulse is to be attributed to valid sample scintillation.

Yet another object of this invention is to provide a technique and system of the above type which is particularly suited for use with samples having inherently low radioactivity levels.

A related object is to provide a system of the above kind which can be easily adapted to measure both beta and gamma types of radioactivity.

These and other objects are achieved, according to the system of this invention, by providing a liquid scintillation pulse discrimination system of the burst-counting type described in the aboveidentified parent application with an active radioactivity guard shield made of a solid scintillation material around the liquid scintillation sample being monitored. The active guard shield is designed in such a way that radioactivity from the liquid scintillation sample contained within the solid scintillator material of the guard shield is prevented from interacting with the guard shield material. The solid scintillator material is easily excited by external, background radiation and the resulting scintillations or light from the solid scintillator are coupled into the same optical event detection means that are used to monitor the liquid scintillator sample. By virtue of its inherent characteristics, the solid scintillator produces a photon pulse burst which is characteristically spread over an interval of several microseconds. This is in contrast to the scintillation of the liquid scintillator caused by radioactive decay of the sample in which all the photons are essentially emitted simultaneously so that no characteristic burst is present. This difference in pulse characteristics is used to advantage in this invention since the burst counting measurement system detects such bursts which also characteristically follow any coincidence pulse generated in the measurement system as a result of background radiation.

The system of this invention thus provides a two-way discrimination capability between pulses generated by valid scintillations and those generated by internally or externally excited background radiation. More specifically, when invalid optical events are produced as a result of background activity, any resulting coincidence pulse is usually followed by the characteristic pulse burst which is detected by the system, whereas valid sample optical events are not followed by such a pulse burst. Desired adjustments are then made in the calculated overall energy spectrum for the monitored sample.

The presence of background sources of radiation, such as gamma radiation in the form of cosmic rays, excites the material of the vial which contains the liquid sample and the glass material of the photomultiplier tubes to produce characteristic pulse bursts. The background radiation also invariably excites the solid scintillator material which acts as an active guard shield and produces a coincident pulse which is followed by a pulse burst characteristic of the solid scintillator. This burst, however, contains more pulses due to the increased scintillation characteristics of the solid scintillator material. The overall effect is to enhance or make more noticeable the characteristic pulse bursts generated by background radiation, thereby allowing the pulse bursts to be accurately and more easily detected by the measurement system. This enhanced pulse burst permits the use of a higher burst count threshold value in order to distinguish easily between valid and invalid optical events, especially when the valid count rate is comparable to the background count rate. It is thus possible to ensure that most background optical events are accurately detected and subsequently discounted from or suitably fractionally weighted into the energy spectrum calculation procedure.

The provision of the solid scintillator material as an active radiation guard shield around the liquid scintillation sample to be monitored hence allows increased discrimination between pulses generated as a result of valid scintillations within the sample and those generated by external or background radiation activity, thereby providing the "burst-counting" based liquid scintillation measurement system with significantly increased efficiency and accuracy of measurement, especially when used with low-energy and low-activity radiation samples. The measurement system is quite simple and convenient to use and does not require additional optical event detection means to realize the improved discrimination capability.

Other objects, characteristics and advantages of the present invention will be apparent from the following detailed description when taken in conjunction with the accompanying drawings.

FIG. 1 is a simplified block diagram of a liquid scintillation measurement system of the coincidence detection type including means for detecting the pulse bursts characteristic of background radiation;

FIG. 2 is an illustration of the structural details involved in encasing the liquid scintillation sample with an active guard shield for use with the measurement system of FIG. 1;

FIG. 3 is a diagramatic illustration of an alternative arrangement for providing an active guard shield around the liquid sample;

FIG. 4 is an illustration of a third arrangement of the active guard shield for use with the measurement system of FIG. 1; and

FIG. 4a is an enlarged cross-sectional view of a typical solid scintillator bead for use with the embodiment of FIG. 4.

While the invention will be described in connection with certain preferred embodiments, it will be understood that it is not intended to limit the invention to these particular embodiments. On the contrary, it is intended to cover all alternatives, modifications and equivalent arrangements as may be included within the spirit and scope of the invention as defined by the appended claims.

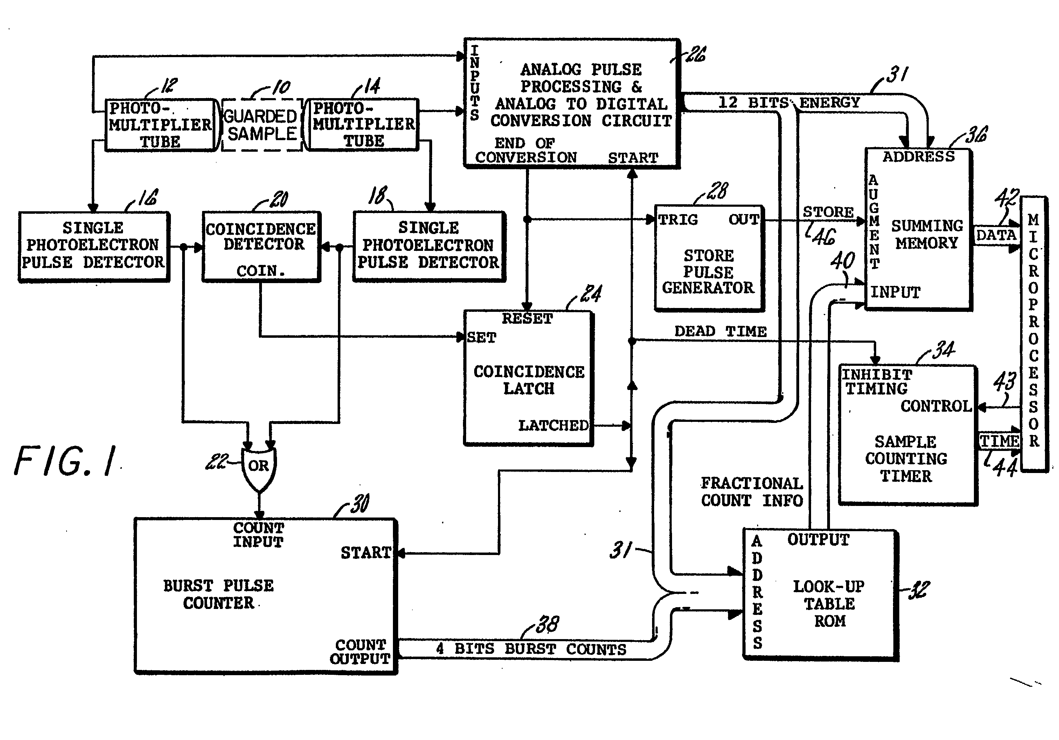

Referring now to FIG. 1, there is shown a block diagrammatic view of the improved "burst-counting" type liquid scintillation measurement system according to this invention.

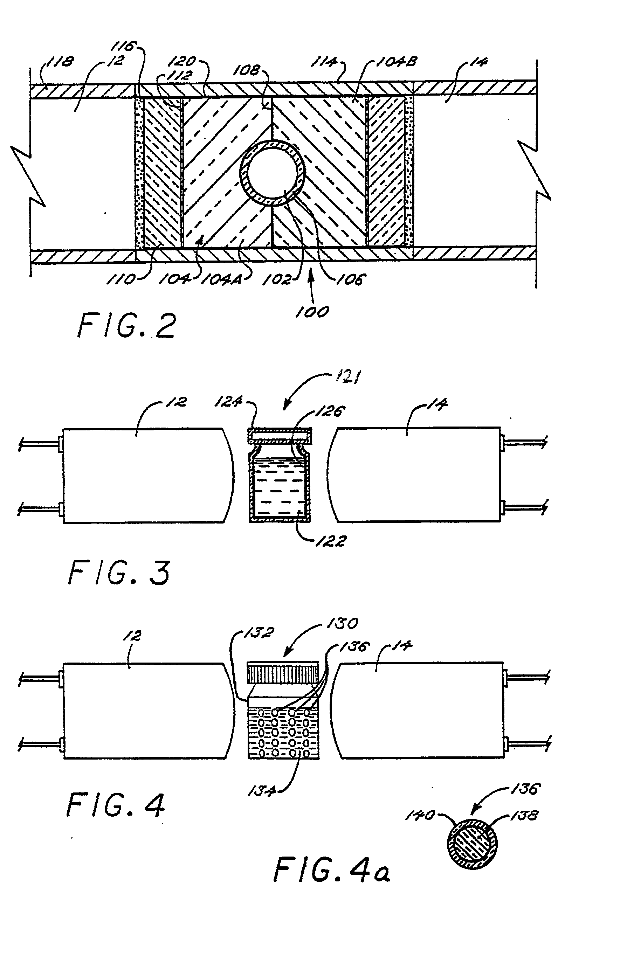

In FIG. 1, the guarded liquid scintillation cocktail unit 10 containing the sample to be tested, is mounted in a shielded area wherein photomultiplier tubes 12 and 14 may be utilized to detect optical events. For purposes of clarity, the measurement system represented in FIG. 1 will be initially described without accounting for the effect of the active guard shield surrounding the sample, and the structural arrangement and function of the guard shield will then be described in detail with reference to FIGS. 2-5. As the radionuclide in the scintillation cocktail decays, beta particles are emitted within the guarded unit 10 and act to energize a scintillating fluor within the cocktail. The fluor converts the energy from the beta particles into light photons which are detected by the photomultiplier tubes 22 and 14. The photomultiplier tubes generate an analog electrical pulse representative of the energy level of the detected event and their outputs are sensed and transformed to a digital format by photoelectron pulse detectors 16 and 18, which are essentially amplitude comparators operating with an appropriate reference voltage.

The digital pulses emitted by the single photoelectron pulse detectors 16 and 18 are called "singles" pulses and are directed to a coincidence detector 20 and to an OR gate 22 and represent the fact that an analog pulse of at least a single photoelectron amplitude has been detected. The coincidence detector 20 identifies when a singles pulse occurs substantially simultaneously at both photomultiplier tubes and in response thereto transmits a coincidence signal to coincidence latch 24. The coincidence signal acts to trigger the sequence of steps necessary to analyze, convert and store data representing the initiating optical event. The OR gate 22 acts to pass both of the two singles signals received from single photoelectron pulse detectors 16 and 18 and delivers these as count inputs to a burst pulse counter 30. Such inputs are called the summed singles signal.

Each of the photomultiplier tubes 12 and 14 is also connected to an analog pulse processing and analog-to-digital conversion circuit 26. This circuit acts to shape the appropriate analog pulses and to provide a digital output signal indicative of the energy level of a particular pulse. This output signal typically a 12 bit signal, is carried over a bus 31 which extends from analog pulse processing and analog-to-digital conversion circuit 26 to a look-up table ROM 32 and a summing memory 36.

Burst pulse counter 30 is likewise connected with a four-bit data bus 38, to deliver burst counts to the look-up table ROM 32. Look-up table ROM 32 is a table of probabilities based on both the number of burst counts following a coincidence pulse within a predetermined time window which is supplied over bus 38 and the energy level of the pulse which is supplied over bus 31. Having these two inputs a probability factor is determined at look-up table ROM 32 which is conveyed over bus 40 to summing memory 36. The pulse value of 1 is multiplied by the probability that it is a valid sample pulse as opposed to an invalid background pulse and is summed in memory 36. This information is then provided over data bus 42 to the microprocessor associated with the liquid scintillation counter as is known in the art.

The coincidence detector 20 additionally provides a coincidence signal to coincidence latch 24. This signal acts to set the coincidence latch. Once coincidence is detected, and if the latch is not currently latched indicating a busy condition, the latch signal is generated by coincidence latch 24. This latch signal is disseminated to burst pulse counter 30 to effect starting of the time interval after the coincidence pulse during which the burst pulse counter will count pulses. A signal is also delivered to the analog pulse processing, analog-to-digital conversion circuit 26 to commence operation of that circuit relative to the coincidence pulse and it is connected to sample counting timer 34 to indicate to that circuit that the sample counting timing is inhibited. Sample counting timer 34 is started, stopped, and reset by a control signal from the microprocessor through signal path 43 and the sample counting time is provided to the microprocessor through a bus 44.

The analog pulse processing, analog-to-digital conversion circuit 26 also provides an indication of the end of the conversion process for a particular pulse through a connection to the coincidence latch 24 in order to effect reset of the coincidence latch after the pulse has been processed and converted and is connected to store pulse generator 28 to trigger the store pulse generator to have the summing memory add a particular pulse of fractional count value supplied by bus 40 to its memory. The output signal 46 of the store pulse generator 28 is connected to the summing memory 36.

## Method of Operation

When both photomultiplier tubes generate the appropriate pulses indicating that a sample pulse has been detected and the coincidence detector detects that said pulses have occurred at the same time, then an appropriate signal is generated to coincidence latch 24 to provide a latch signal. In the interim all pulses detected by both of the photomultiplier tubes, both the valid sample pulses and scintillations from the same glass or the photomultiplier tube glass or electrical noise are passed on by the photomultiplier tubes to the single photoelectron pulse detectors 16 and 18 and therefrom through OR gate 22 to the burst pulse counter 30. Once coincidence detector 20 detects a coincident signal the signal acts to set coincidence latch 24 which then starts the time interval for burst pulse counter 30. It is during this time interval that the number of pulses following the coincidence signal is detected and it is this number that is supplied to the look-up table ROM via data bus 38. Burst pulse counter 30 is designed to have a time interval built therein such that the length of the time window during which pulses are counted is known and is on the order of 3 to 9 microseconds.

The coincidence latch 24, in addition to generating a latch signal, also acts to start analog pulse processing and analog-to-digital conversion circuit 26. Analog pulse processing and analog-to-digital conversion circuit acts to generate a 12-bit digital signal indicative of the energy level of the pulses received from photomultiplier tubes 12 and 14. Once the process of converting the signal to a 12-bit digital signal is completed, an end of conversion signal is sent to reset the coincidence latch 24 and to trigger the store pulse generator 28.

The energy level of the pulse from analog pulse processing analog-to-digital conversion circuit 26 is conveyed over data bus 31 and the burst count is conveyed over data bus 38. Both counts are conveyed to look-up table ROM 32 and are utilized to determine the probability that the event indicated by the coincidence detector to be a coincident pulse is an actual sample event to be utilized in determining the spectra of the radioactive decay of the radionuclide within the sample. As the number of burst counts in the time interval following the coincidence pulse increases the probability that the coincident pulse is a valid sample pulse decreases. Additionally, this probability varies with the overall energy level of the coincident pulses received at the conversion circuit 26. Hence, the look-up table concerns itself with both the number of burst counts in the time interval and the energy level of the coincident pulses. From these two factors the probability that it is a valid sample pulse is determined. This probability value in theory is assigned a number between zero and 1. The probability value is supplied to summing memory 36.

The end of conversion signal from analog pulse processing analog-to-digital conversion circuit 26 is received by store pulse generator 28 as a trigger signal. In response to the trigger signal the output 46 from store pulse generator 28 causes the summing memory 36 to add a count at the given energy level to the register summing counts of that level or to add a count or fraction thereof at a specific energy level depending upon the specific pulse. Fractional count information is provided over bus 40 from look-up table 32. Hence, the summing memory multiplies a count value of 1 times the fractional count information which is the probability that it is a valid sample and enters that value in its memory. For instance, if the theoretical probability is .7 that a pulse is a valid sample pulse then the summing memory will identify the appropriate energy level and a number of .7 will be added to the other numbers at that energy level to indicate the total number of counts for that particular energy level for the sample being monitored.

The burst pulse counter is a combination of a gated counter and a timer. The counter is originally set to zero and the start pulse starts the timer. The timer enables the counting gate and permits summed singles, received from the OR gate 22, to be counted. (Note that the singles involved in generating the coincidence signals are not counted.) The counting of summed singles (burst counts) continues until the timer times out (approximately 5 microseconds later) and the counting gate is disabled. The counted value is then held in the counter and on bus 38 until the fractional count information on bus 40 is stored in the memory 36.

The single photoelectron pulse detectors 16 and 18 each include a voltage threshold detector that outputs a digital pulse of fixed width in the area of 50-200 nanoseconds when its analog input amplitude exceeds an amplitude corresponding to a suitable level for detecting a single photoelectron pulse from the photomultiplier tube. It is able to detect input pulses as short as 2 nanoseconds.

The remainder of the components are basically known components which may be assembled in the manner described and perform the designated functions. The microprocessor is equivalent to the microprocessors incorporated in the current products offered by liquid scintillation counter manufacturers in the U.S.A.

The system described so far is capable of discriminating fairly accurately between coincident pulses generated as a result of actual radioactive emission from the radionuclide within the liquid scintillation sample and those pulses generated due to spurious background events on the basis of the characteristic pulse bursts which follow the spurious events. However, when the pulse burst characteristically produced by invalid background events has a small number of pulses, identifying an invalid background event accurately becomes a problem because of the confusion arising due to the occasional existence of a very small pulse burst following some valid optical events as a result of afterpulsing of the photomultiplier tubes. It is in cases like these that the use of the active guard shield around the liquid scintillation sample, as described below, significantly improves the discrimination ability and hence the accuracy of the detection system.

Referring to FIG. 2, there is shown a preferred structural arrangement for encasing the liquid scintillation sample with an active guard shield and coupling it to the photomultiplier tubes, for use with the measurement system of FIG. 1.

In FIG. 2, the guarded sample arrangement includes a sampling unit 100 comprising a vial 102 which is surrounded by a solid scintillation crystal 104. The crystal 104 is preferably constructed of two bonded crystals, 104A and 104B, of the desired solid scintillation material in a cylindrical configuration which has a central hole defined in it allowing the liquid scintillation vial 102 to be centrally placed within it. The scintillation vial 102 which contains the sample is generally of a transparent material, such as borosilicate glass, commonly used for containing liquid samples. Since the radioactivity of the sample is of the beta type, it is incapable of penetrating the solid material of the glass vial and is prevented from exciting the solid crystal material. The crystal can hence be excited only by external background radiation. A quartz sleeve 106 surrounds the scintillation vial 102 and serves as an optical window for allowing photons originating in the liquid sample contained within the scintillation vial 102 to be coupled to the photomultiplier tubes 12 and 14 of FIG. 1. In addition, the sleeve provides moisture protection for the inner surface of the normally hydroscopic solid scintillator material.

In order to prevent any optical crosstalk between the photomultiplier tubes 12 and 14, a layer of reflective material 108 is provided in between the mating surfaces of the bonded crystals 104A and 104B. The reflective material prevents scintillations produced in any one of the bonded crystals from exciting a response from the photodetector corresponding to the other of the bonded crystals.

Each of the bonded crystals is attached to a quartz window 110 through a layer of light permeable optical epoxy glue 112 and the structure formed by the bonded crystals and the quartz windows is encased in a metallic housing 114 made of a dense material, such as brass, having low radioactive contaminant levels so that the housing itself does not contribute to background radiation. The solid crystal material of the sampling unit 100 is optically coupled to the faces of the photomultiplier tubes 12 and 14, via a layer of suitable optical material 116 such as silicon grease placed between the quartz windows 110 and the active surfaces of the photomultiplier tubes 12 and 14. A similar layer (not shown) is used to optically couple the quartz sleeve 106 to the crystal 104. Each of the photomultiplier tubes is encased in a metallic housing 118 so that coupling of the tubes to the quartz window 110 of the sampling unit 100 results in a light-tight structure.

In order to ensure that a majority of scintillations generated from within the liquid scintillation sample as well as the surrounding solid crystal reach the respective faces of the two photomultiplier tubes 12 and 14, a coating 120 of reflecting powder or paint is provided on all outer surfaces of the crystal except at places where optical transmission is necessary, such as the interfaces with the quartz sleeve 106 and with the faces of the photomultiplier tubes.

The above arrangement allows convenient assembly and disassembly of the sample unit relative to the photomultiplier tubes. The provision of the quartz window serves as a permanent means for protecting the external surfaces of the hydroscopic crystal from moisture and allows the sample unit to be conveniently decoupled from the photomultiplier tubes (when the tubes have to be replaced or for any other reason) and reassembled without affecting the crystal material in any way.

The function of such a detector, which includes the liquid scintillation sample encased in a solid scintillator crystal, in enhancing the operation of the measuring system of FIG. 1 will now be described.

In the absence of the solid crystal guard shield, external radiation, such as cosmic rays, strikes the glass material of the scintillation vial as well as the glass of the photomultiplier tubes and produces some scintillations which constitute invalid optical events. Because the material of the vial and the photomultiplier tubes is conventionally chosen to be of the low scintillation capacity, characteristic pulse bursts following such invalid events are likely to contain a small number of pulses. This requires a lower burst count discrimination threshold and, as discussed above, increases the probability of erroneous discrimination between valid and invalid optical events which seriously affects the accuracy of measurement in the case of low-level scintillation counting applications.

The provision of the active guard shield enhances the accuracy of the burst counting measurement system in such applications. The solid scintillator material of the guard shield is selected to be easily excited by external radiation and hence produces a burst of photons over a time period that is long in comparison to the length of time over which the scintillation cocktail emits photons. In addition, the solid scintillator is chosen to be a fairly efficient transmitter of light so that most of the light from the scintillation cocktail is coupled directly to the photomultiplier tubes. The solid scintillator also must contain a very low amount of radioactive contaminants so that no significant background radioactivity is generated by the solid scintillator itself. When cosmic rays strike the solid scintillation crystal, it scintillates and produces corresponding signals within the photomultiplier tubes 12 and 14. The subsequent operation of the rest of the measurement system is identical to the description provided in the case of FIG. 1. The significance, however, is that when the solid crystal is excited by external radiation such as gamma rays it produces a characteristic pulse burst following a detected coincident pulse, which includes an increased number of pulses as compared to the characteristical pulse burst normally resulting from the external excitation of the glass material of the scintillation vial and the photomultiplier tubes.

It will be noted that the same external radiation produces background scintillations from the solid crystal as well as the vial since the crystal and the vial holding the sample are optically coupled to the photomultiplier tubes (FIG. 2). These two background scintillation effects are inherently coincidental in nature, so that the strong characteristic pulse burst from the solid crystal is superimposed onto the relatively weaker characteristic pulse burst from the material of the vial and the photomultiplier tubes liquid sample. The "weak" pulse burst resulting normally from background radiation excitation is thus augmented by the correspondingly "strong" pulse burst resulting from background radiation excitation of the solid crystal, thereby making the characteristic pulse bursts more noticeable (i.e., increased number of pulses within a selected time interval following a coincident pulse) so that the burst count discrimination threshold can be raised to a higher count resulting in a decreased probability of erroneous discrimination between valid and invalid optical events.

Even if the scintillation vial and photomultiplier tube glasses have weak photon emission properties, the presence of the solid crystal guard shield results in stronger characteristic pulse bursts as a result of background radiation and consequently improved discrimination and accuracy of measurement, especially for cases where count rates for valid and invalid optical events are of the same order of magnitude. The net result is that even though a valid sample optical event has the possibility of occasionally being followed by burst pulses due to photomultiplier tube after-pulsing, significantly reduced number of valid optical events are misclassified by the detection system as invalid optical events and vice-versa because of the increased burst count threshold needed for an optical event to be considered invalid. This directly increases the figure of merit for the measurement system, which is defined as

$$\frac{E^2}{B},$$

where E is the ratio of the number of detected disintegrations to the total number of disintegrations and B is the number of detected background events in the absence of sample radioactivity, since the number of detected valid events is increased (resulting in a higher value for E), while the number of invalid background events is decreased.

It will be understood that the presence of the solid scintillation material aids in the measurement process because the illustrative measurement system is capable of rejecting coincident pulses generated by background radiation on the basis of the burst-counting technique described above with reference to FIG. 1. It is hence the combination of the active guard shield with the burst-counting discrimination technique, according to this invention, that produces the increase in accuracy of liquid scintillation measurement.

Referring now to FIG. 3, there is shown an alternate and structurally uncomplicated configuration of an active guard shield arrangement that can be used in conjunction with the liquid scintillation measurement system of FIG. 1. This arrangement dispenses with the need for the solid crystal active guard shield to be constructed with the two photomultiplier tubes as the discretely structured unit shown in FIG. 2. In the embodiment of FIG.3, the liquid scintillation vial 121 itself forms the active guard shield for the liquid scintillation cocktail 122 contained within the vial. More specifically, the vial 121 is composed of a solid scintillator material 124 possessing a high scintillation capacity, and is positioned within the operating range of the two photomultiplier tubes 12 and 14 which form the optical event detection means in the liquid scintillation measurement system of FIG. 1. A variety of solid scintillator materials such as sodium iodide, calcium flouride, high scintillation glass, plastic, etc., may be used to construct the liquid scintillation vial 121 as long as the additional functional requirements of long scintillation time and efficient light transmission properties are met.

The liquid scintillation vial 121 is provided with an optically transparent, electron impermeable coating 126 on its inside surface in order to prevent the radioactivity emitted by the liquid sample from exciting the solid scintillator material of the vial. More specifically, the coating 126 prevents the beta radioactive emission from the liquid sample, which is in the form of charged electrons, from striking the solid scintillator material of the vial. However, background radiation, such as cosmic rays which essentially consist of gamma radiation, has substantially greater penetration capability and easily passes through the scintillation vial 121 and the electron impermeable coating 126 to strike the liquid scintillation cocktail 122 contained within the vial 121. Some form of conventional reflector means (not shown) is externally provided around the scintillation vial in order to contain and direct scintillations from the vial toward the photomultiplier tubes.

The principal of operation of this embodiment is essentially similar to that described above with respect to FIG. 2 and is based on the premise that background external radiation such as cosmic rays produces sintillations in the liquid scintillator 122 as well as the photomultiplier tubes and any resultant coincident pulses detected by the photomultiplier tubes 12 and 14 are followed by the pulse burst characteristic of background radiation, which the measurement system of FIG. 1 is capable of detecting. The solid scintillator material of the liquid scintillation vial 121 acts as an active guard shield and is also excited by any external radiation and, at substantially the same time, produces scintillations which result in coincident pulses which are followed by a pulse burst characteristic of solid scintillator materials, thereby resulting in a characteristic pulse burst that is enhanced by virtue of an increased number of pulses and which may be more easily and accurately used by the measurement system of FIG. 1 in order to accurately distinguish between valid and invalid optical events.

It will be understood that the use of the vial made of a solid scintillator material as an active guard shield for the liquid scintillation cocktail contained within the vial is possible because the burst-counting measurement technique allows convenient discrimination between scintillations excited by true sample optical events as opposed to those excited within the solid scintillator material due to background radioactivity.

FIG. 4 shows another configuration of an active guard shield arrangement for use in conjunction with the liquid scintillation measurement system of FIG. 1. In the embodiment of FIG. 4, the liquid scintillation vial 130 is of a standard low scintillation capacity material 132, such as conventionally used in liquid scintillation measurement systems. The active guard shield for the liquid scintillation cocktail 134 in this case is provided within the scintillation cocktail itself in the form of a multiplicity of small beads 136 made of a suitable solid scintillator material. Each of the beads 136 consists of a central core of solid scintillator material 138 which is provided with an optically transparent outer coating 140 of a suitable electron impermeable material, as shown in the enlarged view of FIG. 4A. The solid scintillator material of the beads 136 need not be an efficient transmitter of light, since no light need actually pass through the scintillator beads. The solid scintillator beads 136 are mixed into and held in suspension by the solvent contained in the liquid scintillation cocktail 134. The outer coating 140 of the beads 136 prevents the charged-electron beta radiation from the radioactive sample in the cocktail from penetrating through to strike the solid scintillator material 138, while external gamma radiation easily penetrates the scintillation vial 132, the scintillation cocktail 134 and the coating 140 of the beads 136 to strike and produce scintillations within the solid scintillator material of the beads. The embodiment of Fig. 4 is also provided with conventional reflector means (not shown) which is disposed externally around the scintillation vial and directs light scintillation to the photomultiplier tubes.

As in the embodiments discussed with reference to FIGS. 2 and 3, the beads of solid scintillator material act as an active guard shield which is responsive to external radioactivity and effectively produces an enhanced characteristic pulse burst in the presence of external radiation. It will be apparent to those skilled in the art that the liquid scintillation cocktail may also be formed as a gelled mixture of the cocktail with ground up or crushed solid scintillator material which promotes suspension of the solid scintillator material in order to realize the active guard shield effect.

The above-described system can easily be adapted to measure the presence of gamma radiation. For instance, the measurement system can be conveniently modified to count only those optical event pulses which are followed by pulse bursts of at least a selected number and which are produced as a result of radiation from a sample emitting radioactivity of the gamma type striking the solid scintillator material in the embodiments described above. As is apparent, such event pulses, which are easily detected by the measurement system because the corresponding pulse bursts produced by the solid scintillator material of the active guard shield are characteristically spread over an interval of several microseconds, provide an accurate indication of existing gamma radioactivity. In such an application, no liquid scintillator or its associated quartz sleeve is required since the gamma radiation excites the solid crystal material directly in order to produce the optical event pulses having characteristic pulse bursts. In this case, the guard shield made of the solid scintillator material essentially behaves as a crystal detector responsive to the gamma radiation being measured. The thickness of the solid scintillator vial has to be increased so as to be sufficient to accommodate the relatively high energy photon bursts generated by the gamma radiation. The system is thus conveniently adaptable for use with samples emitting either beta or gamma radiation.

As is apparent from the foregoing description, the system of this invention provides significantly improved accuracy of measurement of low level liquid scintillation by providing improved discrimination between scintillations caused by true sample radioactivity and those produced as a result of internal as well as external background activity. The system is extremely simple, versatile, and convenient to use and does not require the additional expense, complexity and inconvenience of bulky external guard shielding arrangements, along with the additional detectors and anti-coincidence detection systems associated with such shields.

## Claims

1. A low-level liquid scintillation measurement system comprising counting means for counting sample optical events resulting from the radioactive decay of a constituent of a sample (10) to be measured while reducing the counting of background optical events which are optical events produced by background radiation and which create electrical pulses other than pulses representing a sample optical event, said counting means including a plurality of detection means (12, 14) located adjacent the sample (10) for detecting optical events and for converting optical events into electrical pulses, coincidence sensing means (16, 18, 20) for receiving said electrical pulses from said plurality of detection means (12, 14) and producing a trigger pulse when said electrical pulses from said plurality of detection means coincide with each other, burst detection means (30) for receiving said trigger pulses from said coincidence sensing means (16, 18, 20) and said electrical pulse from said plurality of detection means (12, 14) for determining the number of electrical pulses present in a selected interval following each of said trigger pulses, evaluation means (32) connected to the burst detection means (30) for determining, in response to the number of pulses detected in said selected interval, the extent to which the optical event represented by the corresponding trigger pulse should be treated as a sample optical event or a background event, said system further comprising an active guard shield (100) arrangement comprising a solid auxillary scintillator material (104) provided around said sample (16) to be measured optically coupled to said plurality of detection means (12, 14) said shield being adapted to be excited by background radiation and to effectively increase the number of electrical pulses present in said selected interval following a trigger pulse generated as a result of said coincident pulses produced due to the background radiaton, thereby allowing said measurement system to accurately evaluate the number of pulses detected in the selected interval and determine the extent to which a trigger pulse is to be treated as a sample optical event.

2. The measurement system of claim 1 characterised in that said sample (10) is contained in a vial (102) composed of a low-scintillation material and the guard shield arrangement includes a solid auxiliary scintillator (104) surrounding said vial (102), said solid scintillator (104), said vial (102) and said detection means (12, 14) being contained in a light-tight housing (118), an optical coupling medium (112, 110) disposed between said solid scintillator (104) and said detection means (12, 14), a transparent sleeve (106) surrounding the scintillation vial (102) and functioning to allow optical coupling to said detection means (12, 14), and a reflective coating (108) provided on the outer surface of said solid scintillator (104) to contain scintillation within the housing (118).

3. The measurement system of claim 2 characterised in that said solid scintillator (104) is capable of transmitting a substantial portion of light from said sample (10) to said plurality of detection means (12, 14), is easily excited by background radiation and produces said increased number of electrical pulses following a trigger pulse generated as a result of said coincident pulse produced due to the background radiation.

4. The measurement system of claim 3 characterised in that said sold scintillator (104) is formed by bonding together a pair of segments of solid scintillator (104a, 104b) with a reflective coating (108) provided at the bonding interface so as to prevent transmission of light from one segment to the other.

5. The measurement system of claim 3 characterised in that said solid scintillator (104) is composed of glass or plastic scintillator material.

6. The measurement system of claim 1 characterised in that said guard shield arrangement is in the form of a vial (120) constructed of a high-scintillation solid auxiliary scintillator (124) for containing the liquid sample (122), said vial (120) having its inner surface coated with an optically transparent electron impermissive layer (126) that prevents radiation emitted by said liquid from reaching the solid crystal (124).

7. The measurement system of claim 6 characterised in that said solid scintillator (124) is capable of transmitting a substantial portion of light from said sample (122) to said plurality of detection means (12, 14), is easily excited by background radiation and produces said increased number of electrical pulses following a trigger pulse generated as a result of said coincident pulse produced due to the background radiation.

8. The measurement system of claim 7 characterised in that said solid scintillator (124) is composed of glass or plastic scintillator material.

9. The measurement system of claim 1 characterised in that said guard shield arrangement is in the form of a vial (120) constructed of a low-scintillation material (132) for containing the liquid scintillation sample (134), and said sample (134) includes particles (136) of a solid high-scintillation material (138) suspended within it, said particles (136) externally coated with an optically transparent electron impermissive layer (140) that prevents radiation emitted by said liquid sample (134) from reaching the solid material (138).

10. The measurement system of claim 9 characterised in that said solid scintillation material (138) is easily excited by background radiation and produces said increased number of electrical pulses following a trigger pulse generated as a result of said coincident pulse produced due to the background radiation.

11. The measurement system of claim 10 characterised in that said solid scintillator is composed of glass or plastic scintillator material.

12. The measurement system of claim 11 characterised in that said particles are in the form of beads (136) of said solid scintillator material (138) suspended within the liquid scintillation sample (134).

13. The measurement system of claim 1 characterised in that said evaluation means (30) includes means for comparing (32) the number detected by the burst detection means (30) and the energy level of the coincident optical events to a known table to determine the extent to which an optical event is to be treated as a sample optical event, means for summing (36) the optical events counted for a sample wherein each event is weighted based on the determination made by the evaluation means.

14. A scintillation measurement system comprising counting means for counting sample optical events resulting from gamma radiation produced by radioactive decay of a sample to be measured, said counting means including a plurality of detection means (12, 14) located adjacent the sample (10) for detecting optical events and for converting optical events into electrical pulses, burst detection means (30) for receiving said electrical pulses from said plurality of detection means (12, 14) for determining the number of electrical pulses present in a selected time interval following detection of an optical event, evaluation means (32) connected to the burst detection means (30) for determining, in response to the number of pulses detected in said selected interval, the extent to which the optical event represented by the number of electrical pulses determined by the burst detection means (30) should be treated as a sample optical event, said system also comprising a crystal detector arrangement (100) comprising a solid scintillator material (104) provided around said sample (10) to be measured and optically coupled to said plurality of detection means (12, 14), said crystal detector (100) adapted to be excited by the gamma radiation from the sample and produce said number of electrical pulses in said selected time interval, thereby allowing said measurement system to accurately evaluate the number of sample optical events.

15. The measurement system of claim 14 characterised in that said sample is contained in a vial (102) composed of a low-scintillation material and the crystal detector arrangement includes a solid scintillation crystal (104) surrounding said vial (102), said crystal (104), said scintillation vial (102) and said detection means (12, 14) being contained in a light-tight housing (118), an optical coupling medium (110, 112) disposed between said solid crystal (104) and said detection means (12, 14), and a reflective coating (108) provided on outer surface of said crystal (104) to contain scintillations within the housing (118).

16. The measurement system of claim 15 characterised in that said crystal detector arrangement is in the form of a vial (120) constructed of a high-scintillation solid crystal material (124) for containing the gamma radiation sample.

17. The system of claim 15 characterised in that said crystal detector arrangement is in the form of a vial (130) constructed of a low-scintillation material (132) for containing the gamma radiation sample, and said sample (134) includes particles (136) of a solid high-scintillation material (138).

**Patentansprüche**

1. Low-Level Flüssigkeits-Szintillationsmeßgerät mit Zählmitteln, zum Zählen von probenoptischen Ereignissen, die aus dem radioaktiven Zerfall eines Bestandteils einer zu vermessenden Probe (10) resultieren, während sie das Zählen von hintergrundoptischen Ereignissen reduzieren, welches optische Ereignisse sind, die von einer Hintergrundstrahlung erzeugt werden und die elektrische Impulse erzeugen, die von den Impulsen, die ein probenoptisches Ereignis repräsentieren, verschieden sind, wobei die Zählmittel eine Mehrzahl an die Probe (10) angrenzende Nachweismittel (12, 14) zum Nachweisen optischer Ereignisse und zum Umwandeln der optischen Ereignisse in elektrische Impulse einschließen, Koinzidenzabtastmitteln (16, 18, 20) zum Empfangen elektrischer Impulse von der Mehrzahl von Nachweismitteln (12, 14) und zum Erzeugen eines Triggerimpulses, wenn die elektrischen Impulse von der Mehrzahl der Nachweismittel miteinander koinzidieren, Burst-Nachweismitteln (30) zum Empfangen der Triggerimpulse von den Koinzidenzabtastmitteln (16, 18, 20) und des elektrischen Impulses von der Mehrzahl der Nachweismittel (12, 14) zum Bestimmen der Anzahl elektrische Impulse, die in einem Intervall vorliegen, das auf jeden der Triggerimpulse folgt, an die Burst-Nachweismittel (30) angeschlossenen Auswertmitteln (32) zum Bestimmen des Ausmaßes, bis zu dem das optische Ereignis, das durch den korrespondierenden Triggerimpuls repräsentiert wird, als ein probenoptisches Ereignis oder ein Hintergrundereignis behandelt werden sollte, in Antwort auf die Anzahl von im ausgewählten Intervalle nachgewiesenen Impulsen, wobei das genannte Gerät weiterhin umfaßt eine aktive Abschirmschildanordnung (100), die ein festes Zusatz-Szintillatormaterial (104) aufweist, das um die zu messende Probe (16) herum angeordnet ist und optisch an die Mehrzahl von Nachweismitteln (12, 14) gekoppelt ist, wobei das Schild so adaptiert ist, daß es durch Hintergrundstrahlung angeregt wird und daß es wirksam die Zahl der im ausgewählten Intervall vorhandenen, auf einen Triggerimpuls, der als Ergebnis der gemäß der Hintergrundstrahlung hergestellten Koinzidenzimpulse erzeugt wird, folgenden elektrischen Impulse erhöht, und es dadurch dem Meßgerät ermöglicht, die Zahl der in dem ausgewählten Intervall nachgewiesenen Impulse genauestens auszuwerten und das Ausmaß zu bestimmen, bis zu dem ein Triggerimpuls als ein probenoptisches Ereignis behandelt werden muß.

2. Meßgerät nach Anspruch 1, dadurch gekennzeichnet, daß die Probe (10) in einem Glasfläschchen (102) enthalten ist, das aus einem "low-szintillation" Material besteht, und die Abschirmschildanordnung einen festen Zusatz-Szintillator (104), der das Glasfläschchen (102) umgibt, wobei der feste Szintillator (104), das Glasfläschchen (102) und die Nachweismittel (12, 14) in einem lichtdichten Gehäuse (118) enthalten sind, ein zwischen festem Szintillator (104) und Nachweismitteln (12, 14) angeordnetes optisches Kopplungsmedium (112, 110), eine transparente das Szintillationsfläschchen (102) umgebende Hülse (106), die so wirkt, daß sie eine optische Kopplung an die Nachweismittel ermöglicht, und einen reflektierenden Überzug (108), der an der äußeren Oberfläche des festen Szintillators angeordnet ist, um die Szintillation innerhalb des Gehäuses (118) einzuschließen, aufweist.

3. Meßgerät nach Anspruch 2, dadurch gekennzeichnet, daß der feste Szintillator (104) dazu geeignet ist, einen substantiellen Anteil des Lichtes aus der Probe (10) auf die Mehrzahl von Nachweismitteln (12, 14) zu übertragen, leicht durch Hintergrundstrahlung angeregt wird und die erhöhte Anzahl von elektrischen Impulsen erzeugt, die auf einen Triggerimpuls folgen, der als Resultat der aufgrund der Hintergrundstrahlung erzeugten Koinzidenzimpulse generiert wird.

4. Meßgerät nach Anspruch 3, dadurch gekennzeichnet, daß der feste Szintillator (104) durch Zusammenverbinden eines Segmentpaares von festen Szintillatoren (104a, 104b) mit einem reflektierenden Überzug ausgebildet ist, der an der Verbindungsschnittstelle so angeordnet ist, daß er die Übertragung von Licht von einem Segment auf das andere verhindert.

5. Meßgerät nach Anspruch 3, dadurch gekennzeichnet, daß der feste Szintillator (104) aus Glas- oder Kunststoff- Szintillatormaterial besteht.

6. Meßgerät nach Anspruch 1, dadurch gekennzeichnet, daß die Abschirmschildanordnung in Form eines Glasfläschchens (120) ausgeführt ist, das aus einem "high-szintillation" festen Zusatzszintillator (124) zum Aufnehmen der flüssigen Probe (122) besteht, wobei das Fläschchen (120) an seiner inneren Oberfläche mit einer optisch transparenten elektronenundurchlässigen Schicht (126) überzogen ist, die verhindert, daß von der Flüssigkeit emittierte Strahlung den festen Kristall (124) erreicht.

7. Meßgerät nach Anspruch 6, dadurch gekennzeichnet, daß der feste Szintillator (124) dazu geeignet ist, einen substantiellen Anteil des Lichts von der Probe (122) auf die Mehrzahl von Nachweismitteln (12, 14) zu übertragen, leicht durch Hintergrundstrahlung angeregt wird und die erhöhte Anzahl von elektrischen Impulsen erzeugt, die auf einen Triggerimpuls folgen, der als Resultat der aufgrund der Hintergrundstrahlung erzeugten Koinzidenzimpulse generiert wird.

8. Meßgerät nach Anspruch 7, dadurch gekennzeichnet, daß der feste Szintillator (124) aus Glas- oder Kunststoff-Szintillatormaterial besteht.

9. Meßgerät nach Anspruch 1, dadurch gekennzeichnet, daß die Abschirmschildanordnung in der Form eines Glasfläschchens (120) ausgeführt ist, das aus einem "low-szintillation" Material (132) zum Aufnehmen der flüssigen Szintillationsprobe (134) besteht, und daß die Probe (134) Partikel (136) eines in ihr suspendierten festen "high-szintillation" Materials (138) einschließt, wobei die Partikel (136) äußerlich mit einer optisch transparenten elektronenundurchlässigen Schicht (140) überzogen sind, die verhindert, daß von der flüssigen Probe (134) emittierte Strahlung das feste Material (138) erreicht.

10. Meßgerät nach Anspruch 9, dadurch gekennzeichnet, daß das feste Szintillationsmaterial (138) leicht durch Hintergrundstrahlung angeregt wird und die erhöhte Anzahl von elektrischen Impulsen erzeugt, die auf einen Triggerimpuls folgen, der als Resultat der aufgrund der Hintergrundstrahlung hergestellten Koinzidenzimpulse generiert wird.

11. Meßgerät nach Anspruch 10, dadurch gekennzeichnet, daß der feste Szintillator aus Glas- oder Kunststoff-Szintillatormaterial besteht.

12. Meßgerät nach Anspruch 11, dadurch gekennzeichnet, daß die Partikel in Form von Kügelchen (136) des festen Szintilatormaterials (138) in der flüssigen Szintillationsprobe (134) suspendiert sind.

13. Meßgerät nach Anspruch 1, dadurch gekennzeichnet, daß die Auswertmittel (30) Mittel zum Vergleichen (32) der durch die Burst-Nachweismittel (30) nachgewiesenen Zahl und des Energieniveaus der koinzidenten optischen Ereignisse mit einer bekannten Tabelle, um das Ausmaß zu bestimmen, in dem ein optisches Ereignis als probenoptisches Ereignis behandelt werden muß, und Mittel zum Summieren (36) der gezählten optischen Ereignisse für eine Probe, worin jedes Ereignis auf Grundlage der durch die Auswertmittel gemachten Bestimmung gewichtet wird, einschließen.

14. Szintillationsmeßgerät mit Zählmitteln zum Zählen probenoptischer Ereignisse, die aus der durch radioaktiven Zerfall einer zu vermessenden Probe erzeugten Gamma-Strahlung resultieren, wobei die Zählmittel: eine Mehrzahl an die Probe (10) angrenzende Nachweismittel (12, 14), zum Nachweisen optischer Ereignisse und zum Umwandeln der optischen Ereignisse in elektrische Impulse, Burst-Nachweismittel (30) zum Empfangen der elektrischen Impulse von der Mehrzahl von Nachweismitteln (12, 14) zum Bestimmen der Anzahl elektrischer Impulse in einem auf den Nachweis eines optischen Ereignisses folgenden ausgewählten Zeitintervall, an die Burst-Nachweismittel (30) angeschlossene Auswertmittel (32) zum Bestimmen des Ausmaßes, bis zu dem das optische Ereignis, das durch die Zahl der von den Burst-Nachweismitteln (30) bestimmten elektrischen Impulse repräsentiert wird, als ein probenoptisches Ereignis behandelt werden sollte, in Antwort auf die Anzahl von im ausgewählten Intervall nachgewiesenen Impulsen, wobei das Gerät weiterhin umfaßt: eine Kristallnachweisanordnung (100), die ein um die zu vermessende Probe herum angeordnetes und an die Mehrzahl von Nachweismitteln (12, 14) optisch gekoppeltes festes Szintillatormaterial (104) aufweist, wobei der Kristalldetektor (100) so adaptiert ist, daß er durch die Gamma-Strahlung der Probe angeregt wird und Anzahl von elektrischen Impulsen im ausgewählten Zeitintervall erzeugt, wodurch es dem Meßgerät ermöglicht wird, die Zahl der probenoptischen Ereignisse genauestens auszuwerten, einschließen.

15. Meßgerät nach Anspruch 14, dadurch gekennzeichnet, daß die Probe in einem aus einem "low-szintillation" Material bestehenden Glasfläschchen (102) enthalten ist und die Kristallnachweisanordnung (104) einen das Glasfläschchen (102) umgebenden festen Szintillationskristall (104) umfaßt, wobei der Kristall (104), das Szintillationsfläschchen (102) und die Nachweismittel (12, 14) in einem lichtdichten Gehäuse (118) enthalten sind, sowie ein zwischen dem Kristall (104) und den Nachweismitteln (12, 14) angeordnetes optisches Kopplungsmedium (110, 112), und einen reflektierenden Überzug (108), der an der äußeren Oberfläche des Kristalls (104) vorgesehen ist, um die Szintillation innerhalb des Gehäuses (118) einzuschließen, aufweist.

16. Meßgerät nach Anspruch 15, dadurch gekennzeichnet, daß die Kristallnachweisanordnung in Form eines Glasfläschchens (120), das aus einem "high-scintillation" festen Kristallmaterial (124) zum Aufnehmen der Gamma-Strahlenprobe ausgebildet ist.

17. Gerät nach Anspruch 15, dadurch gekennzeichnet, daß die Kristallnachweisanordnung in Form eines Glasfläschchens (130) aus einem "low-szintillation" Material (132) zum Aufnehmen der Gamma-Strahlenprobe ausgebildet ist und daß die Probe (134) Teilchen (136) aus einem festen "high-szintillation" Material (138) beinhaltet.

**Revendications**

1. Système de mesure par scintillation de liquide à faible niveau, comprenant des moyens de comptage pour compter les évènements optiques d'échantillons résultant de la désintégration radio-active d'un constituant d'un échantillon (10) à mesurer tout en réduisant le comptage des évènements optiques de fond, qui sont des évènements optiques produits par un rayonnement de fond et qui créent des impulsions électriques autres que les impulsions représentant un évènement optique d'échantillon, lesdits moyens de comptage comprenant une pluralité de moyens de détection (12, 14) adjacents à l'échantillon (10) pour détecter les évènements optiques et pour convertir les évènements optiques en impulsions électriques, des moyens de détection de coïncidence (16, 18, 20) pour recevoir lesdites impulsions électriques venant de ladite pluralité de moyens de détection (12, 14) et produire une impulsion de déclenchement lorsque les dites impulsions électriques venant de ladite pluralité de moyens de détection coïncident les unes avec les autres, des moyens de détection de salve (30) pour recevoir lesdites impulsions de déclenchement venant desdits moyens de détection de coïncidence (16, 18, 20) et lesdites impulsions électriques venant de ladite pluralité de moyens de détection (12, 14), afin de déterminer le nombre d'impulsions électriques présentes dans un intervalle choisi après chacune desdites impulsions de déclenchement, des moyens d'évaluation (32) connectés aux moyens de détection desalve (30) pour déterminer, en réponse au nombre d'impulsions détectées dans ledit intervalle choisi, la mesure dans laquelle l'évènement optique représenté par l'impulsion de déclenchement correspondante doit être traité comme un évènement optique d'échantillon ou un évènement de fond, ledit système comprenant en outre un bouclier de protection actif (100) compotant un scintillateur solide auxiliaire (104) prévu autour dudit échantillon (10) à mesurer et optiquement couplé à ladite pluralité de moyens de détection (12, 14), ledit bouclier étant prévu pour être excité par le rayonnement de fond et pour augmenter effectivement le nombre d'impulsions électriques présentes dans ledit intervalle choisi après une impulsion de déclenchement engendré comme résultat desdites impulsions coïncidentes produites du fait du rayonnement de fond, ce qui permet audit système de mesure d'évaluer avec précision le nombre d'impulsions détectées dans l'intervalle choisi et de déterminer le degré auquel une impulsion de déclenchement doit être traitée comme un évènement optique d'échantillon.

2. Système de mesure suivant la revendication 1, caractérisé en ce que ledit échantillon (10) est contenu dans un flacon (102) composé d'une matière à faible scintillation, et le bouclier de protection comprend un scintillateur solide auxiliaire (104) entourant ledit flacon (102), ledit scintillateur solide (104), ledit flacon (102) et lesdits moyens de détection (12, 14) étant contenus dans un boîtier étanche à la lumière (118), un milieu de couplage optique (112, 110) disposé entre le dit scintillateur solide (104) et lesdits moyens de détection (12, 14), un manchon transparent (106) entourant le flacon de scintillation (102) et fonctionnant pour permettre un couplage optique auxdits moyens de détection (12, 14), et un revêtement réfléchissant (108) prévu sur la surface extérieure dudit scintillateur solide (104) pour retenir la scintillation à l'intérieur du boîtier (118).

3. Système de mesure suivant la revendication 2, caractérisé en ce que ledit scintillateur solide (104) est capable de transmettre une partie substantielle de la lumière venant dudit échantillon (10) à ladite pluralité de moyens de détection (12, 14), il est facilement excité par le rayonnement de fond et il produit ledit nombre augmenté d'impulsions électriques après une impulsion de déclenchement engendrée comme résultat de la dite impulsion coïncidente produite du fait du rayonnement de fond.

4. Système de mesure suivant la revendication 3, caractérisé en ce que ledit scintillateur solide (104) est formé par jonction de deux segments de scintillateur solide (104a, 104b) l'un à l'autre, avec interposition d'un revêtement réfléchissant (108) à l'interface de jonction, de façon à empêcher la transmission de lumière d'un segment à l'autre.

5. Système de mesure suivant la revendication 3, caractérisé en ce que ledit scintillateur solide (104) est composé de verre ou d'une matière plastique à scintillation.

6. Système de mesure suivant la revendication 1, caractérisé en ce que ledit bouclier de protection est sous la forme d'un flacon (120) construit en un scintillateur auxiliaire solide à haute scintillation (124) pour contenir l'échantillon liquide (122), la surface intérieure dudit flacon (120) étant revêtue d'une couche optiquement transparente et imperméable aux électrons (126) qui empêche le rayonnement émis par ledit liquide d'atteindre le cristal solide (124).

7. Système de mesure suivant la revendication 6, caractérisé en ce que ledit scintillateur solide (124) est capable de transmettre une partie substantielle de la lumière venant dudit échantillon (122) à ladite pluralité de moyens de détection (12, 14), il est facilement excité par le rayonnement de fond et il produit ledit nombre augmenté d'impulsions électriques après une impulsion de déclenchement engendrée comme résultat d'une dite impulsion coïncidente produite du fait du rayonnement de fond.

8. Système de mesure suivant la revendication 7, caractérisé en ce que ledit scintillateur solide (124) est composé de verre ou de matière plastique à scintillation.

9. Système de mesure suivant la revendication 1, caractérisé en ce que ledit bouclier de protection est sous la forme d'un flacon (120) fabriqué en matière à faible scintillation (132) pour contenir l'échantillon liquide à scintillation (134), et ledit échantillon (134) comprend des particules (136) d'une matière solide à haute scintillation (138) en suspension dans l'échantillon, les dites particules (136) étant revêtues extérieurement d'une couche imperméable aux électrons et optiquement transparente (140) qui empêche le rayonnement émis par ledit échantillon liquide (134) d'atteindre la matière solide (138).

10. Système de mesure suivant la revendication 9, caractérisé en ce que ladite matière solide à scintillation (138) est facilement excitée par le rayonnement de fond et elle produit ledit nombre augmenté d'impulsions électriques après une impulsion de déclenchement engendrée comme résultat de ladite impulsion coïncidente produite du fait du rayonnement de fond.

11. Système de mesure suivant la revendication 10, caractérisé en ce que ledit scintillateur solide est composé de verre ou de matière plastique à scintillation.

12. Système de mesure suivant la revendication 11, caractérisé en ce que lesdites particules sont sous la forme de perles (136) de ladite matière solide à scintillation (138) en suspension dans l'échantillon liquide à scintillation (134).

13. Système de mesure suivant la revendication 1, caractérisé en ce que lesdits moyens d'évaluation (30) comprennent des moyens de comparaison (32) du nombre détecté par les moyens de détection de salve (30) et le niveau d'énergie des évènements optiques coïncidents à une table connue, pour déterminer le degré auquel un évènement optique doit être traité comme un évènement optique d'échantillon, et des moyens d'addition (36) des évènements optiques comptés pour un échantillon, chaque évènement étant pondéré sur la base de la détermination faite par les moyens d'évaluation.

14. Système de mesure à scintillation comprenant des moyens de comptage pour compter les évènements optiques d'échantillon résultant du rayonnement gamma produit par la désintégration radio-active d'un échantillon à mesurer, lesdits moyens de comptage comprenant une pluralité de moyens de détection (12, 14) adjacents à l'échantillon (10) pour détecter les évènements optiques et pour convertir les évènements optiques en impulsions électriques, des moyens de détection de salve (30) pour recevoir lesdites impulsions électriques venant de ladite pluralité de moyens de détection (12, 14) afin de déterminer le nombre d'impulsions électriques présentes dans un intervalle de temps choisi après la détection d'un évènement optique, des moyens d'évaluation (32) connectés aux moyens de détection de salve (30) pour déterminer, en réponse au nombre d'impulsions détectées dansledit intervalle choisi, le degré auquel l'évènement optique représenté par le nombre d'impulsions électriques déterminé par les moyens de détection de salve (30) doit être traité comme un évènement optique d'échantillon, ledit système comprenant également un dispositif de détection à cristal (100) comprenant un scintillateur solide (104) prévu autour dudit échantillon (10) à mesurer et optiquement couplé à ladite pluralité de moyens de détection (12, 14), ledit détecteur à cristal (100) pouvant être excité par le rayonnement gamma de l'échantillon et produire ledit nombre d'impulsions électriques dans ledit intervalle de temps choisi, ce qui permet audit système de mesure d'évaluer avec précision le nombre d'évènements optiques d'échantillon.

15. Système de mesure suivant la revendication 14, caractérisé en ce que ledit échantillon est contenu dans un flacon (102) composé d'une matière à faible scintillation, et le dispositif de détection à cristal comprend un cristal solide à scintillation (104) entourant ledit flacon (102), ledit cristal (104), ledit flacon à scintillation (102) et lesdits moyens de détection (12, 14) étant contenus dans un boîtier étanche à la lumière (118), un milieu de couplage optique (110, 112) disposé entre ledit cristal solide (104) et lesdits moyens de détection (12, 14), et un revêtement réfléchissant (108) prévu sur la surface extérieure dudit cristal (104) pour contenir les scintillations à l'intérieur du boîtier (118).

16. Système de mesure suivant la revendication 15, caractérisé en ce que ledit dispositif de détection à cristal est sous la forme d'un flacon (120) fabriqué en une matière de type cristal solide à haute scintillation (124), pour contenir l'échantillon à rayonnement gamma.

17. Système de mesure suivant la revendication 15, caractérisé en ce que ledit dispositif de détection à cristal est sous la forme d'un flacon (130) fabriqué en une matière à faible scintillation (132) pour contenir l'échantillon à rayonnement gamma, et ledit échantillon (134) contient des particules (136) d'une matière solide à haute scintillation (138).

FIG. 1

EP 0 253 484 B1

FIG. 2

FIG. 3

FIG. 4

FIG. 4a